Europäisches Patentamt

European Patent Office

Office européen des brevets

(11) Veröffentlichungsnummer: **0 342 562 B1**

# EUROPÄISCHE PATENTSCHRIFT

(45) Veröffentlichungstag der Patentschrift: **25.11.92**

(51) Int. Cl.⁵: **C09D 133/04**, D06N 3/08

(21) Anmeldenummer: **89108659.7**

(22) Anmeldetag: **13.05.89**

(54) **Verwendung von Acrylat-Plastisolen zur Herstellung von Laufschichten für PVC-Bodenbeläge.**

(30) Priorität: **17.05.88 DE 3816710**

(43) Veröffentlichungstag der Anmeldung:
**23.11.89 Patentblatt 89/47**

(45) Bekanntmachung des Hinweises auf die
Patenterteilung:
**25.11.92 Patentblatt 92/48**

(84) Benannte Vertragsstaaten:
**AT BE CH DE ES FR GB GR IT LI LU NL SE**

(56) Entgegenhaltungen:
**DE-A- 2 454 235**
**DE-A- 2 722 752**

(73) Patentinhaber: **Tarkett Pegulan Aktiengesellschaft**
**Foltzring 35**
**W-6710 Frankenthal(DE)**

(72) Erfinder: **Dürkop, Joachim, Dr.-Ing.**
**Blumenwiese 9**
**W-5503 Konz(DE)**
Erfinder: **Blass, Reinhold, Dipl.-Ing.**
**Hauptstrasse 81**
**W-5511 Ockten(DE)**

(74) Vertreter: **Grussdorf, Jürgen, Dr. et al**
**Patentanwälte Zellentin & Partner Rubensstrasse 30**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft die Verwendung von Polyacrylat-Plastisolen zur kontinuierlichen Beschichtung von Kunststoffbodenbelägen, insbesondere von strukturierten PVC-Bodenbelägen.

Kunstoffbodenbeläge mit strukturierter Oberfläche, insbesondere auch solche aus PVC, finden heute in großem Umfang Verwendung, vor allem wegen ihrer verschiedenartigen Oberflächengestaltung und ihrer weitgehenden Beständigkeit gegen Abnützung. Von großer technischer Bedeutung sind hierbei auch die durch Ausschäumen in einer entsprechenden Form hergestellten PVC-Schaumbeläge (sogenannte Cushion Vinyls), welche zur Erzeugung der notwendigen Stabilität noch mit einer zusätzlichen PVC-Deckschicht versehen werden müssen. Diese Deckschicht wird üblicherweise als Plastisol, das heißt als gleichmäßige Dispersion von feinen PVC-Pulvern in einem Weichmacher/Lösungsmittel, aufgetragen.

Bei hochwertigen Produkten dieser Art, wird die PVC-Oberschicht zusätzlich noch mit einer Schutzbeschichtung versehen, welche zusätzlich noch schmutzabstoßend wirkt. So wird in der DE 34 33 382 eine zusätzliche Beschichtung mit einer wässrigen Acrylat- und/oder Polyurethan-Dispersion beschrieben. Weiterhin sind Dünnbeschichtungen von wenigen $\mu$m-Dicke auf Basis von linear vernetzten Polyurethanlacken, UV-vernetzenden Polyurethansystemen bzw. feuchtigkeitshärtenden Polyurethansystemen sehr gebräuchlich. Ziel dieser Beschichtung ist es, die Weichmacherwanderung (Migration) aus den PVC-Deckschichten zu verhindern und damit eine Anfälligkeit gegen Schmutz bzw. Fleckverfärbung weitgehend auszuschließen und trockene Oberflächen zu erzeugen.

Obwohl die herausragenden Eigenschaften von Polyacrylaten, wie hervorragende Transparenz und Lichtechtheit sowie die Ausbildung einer trockenen, schmutzabweisenden, fleckbeständigen, harten Oberfläche, bekannt waren, war es bisher nicht möglich dickere Deckschichten aus Polyacrylaten auf einen PVC-, insbesondere PVC-Schaumbelag aufzubringen. Dispersionen oder Lösungen von Polyacrylaten lassen sich nämlich nicht in genügender Schichtdicke aufbringen, Polyacrylat-Plastisole, wie sie beispielsweise aus DE 24 54 235, DE 25 43 542, DE 27 22 752 und DE 31 39 090 bekannt sind und als Beschichtungen für Metall, insbesondere in der Autoindustrie verwendet werden, enthalten soviel mobilen Weichmacher, daß der PVC-Schaum-Grund zerstört wird.

Es bestand daher die Aufgabe, ein Polyacrylat-Beschichtungsmaterial zu finden, mit dem sich dickere Polyacrylat-Schichten aufbringen lassen, die entweder transparent sind und somit das Design der PVC Basis durchscheinen lassen oder durch geeignete Beimischungen (farbige, metallisierte, keramik- oder steinähnliche Komponenten) eine eigene Oberflächenstruktur erzeugen.

Die Lösung dieser Aufgabe wird durch die in Anspruch 1 aufgeführten Merkmale erreicht und durch die in den Unteransprüchen aufgeführten Merkmale gefördert.

Die erfindungsgemäßen Acrylatbeschichtungen zeigen über die gesamte Dicke der Lauf- und Nutzschicht die gleichen vorteilhaften Eigenschaften wie die bekannten Acrylat-Dünnbeschichtungen, nutzen sich jedoch wesentlich langsamer ab, so daß es insbesondere in den Gehzonen nicht zu den bekannten, optisch unansehnlichen Ablaufbereichen kommt, die einer Nachpflege vor Ort bedürfen.

Die erfindungsgemäß verwendeten Polyacrylat-Plastisole bestehen aus einem Polymethacrylat oder Polyacrylat oder Polymethacrylat-Acrylat-Copolymerisat, welches mit einem niederen Alkohol, vorzugsweise Methanol oder Benzylalkohol verestert ist, wobei eine Mischung aus Emulsionspolymerisat und Suspensionspolymerisat in einem Verhältnis von 90-30 : 10-70 %, vorzugsweise 60-40 : 40-60 %, verwendet wird.

Unter Emulsionspolymerisat wird dabei ein Produkt verstanden, bei dem die Monomeren zunächst in einer geeigneten wäßrigen Phase bis zu einer Emulsion, d.h. einer Tropfengröße von 0,1-50 $\mu$m, verteilt werden und anschließend in dieser Form durchpolymerisiert werden. Vorzugsweise wird eine Emulsion mit Teilchen einer Korngröße von etwa 0,5-5, insbesondere 1-3 $\mu$m Durchmesser eingesetzt, welche sich ihrerseits zu größeren Aggregaten mit mittleren Durchmessern von 5-100 $\mu$m zusammenlagern. Besonders bevorzugt sind Polymerisate mit Aggregatgrößen von 20-80 $\mu$m.

Unter Suspensionspolymerisat wird ein entsprechendes Produkt verstanden, bei dem die Monomeren bis zu einer Tropfengröße von ca. 50 bis 200 $\mu$m zerteilt werden und in dieser Form zu Kunststoffperlen polymerisiert werden. Methoden zur Herstellung solcher Produkte, welche als Lackrohstoffe in großer Menge verwendet werden, sind in der Literatur bekannt.

Beim Vermischen der vorgenannten Komponenten mit geeigneten Mengen eines Weichmachers, lassen sich Plastisole herstellen, welche in gleicher Weise und auf den gleichen Maschinen verarbeitet werden können, wie die bekannten Plastisole auf Basis von PVC, so daß für die Verarbeitung der neuartigen Bodenbeläge keine zusätzlichen Investitionen erforderlich sind.

Auf 10 Teile Acrylat werden 5 bis 20, vorzugsweise 10 bis 15 Teile eines geeigneten Weichmachers, beispielsweise Benzyloctylphthalat oder Butyl-benzylphthalat hinzugefügt. Im Gegensatz zu den bekannten Acrylatplastisolen, die aus Sprühpolymerisaten hergestellt werden, werden in diesen Produkten die Weichmacher in den Acrylatperlen soweit aufgesaugt, daß sie diese erweichen und gelieren, so daß sie eine geschlossene Schicht bilden können, ohne jedoch in die benachbarten Schichten überzutreten und diese zu stören. Ein für die Plastifizierung notwendiger Weichmacherüberschuß wird während des Geliervorganges von dem Suspensionspolymerisat aufgenommen, so daß die Oberfläche der fertigen Beschichtung "trocken" ist.

Zur Erzeugung zusätzlicher Festigkeit kann dem Produkt darüberhinaus noch ein gewisser Acrylatmonomeranteil sowie ein Vernetzungsmittel, z.B. ein Peroxid, zugefügt werden, wodurch gleichzeitig auch die benötigte Weichmachermenge weiterhin reduziert werden kann. 1 - 20 % Monomer, vorzugsweise 2 - 10 % Monomer und ca. 1 - 2 % Peroxid, haben sich besonders bewährt.

Zur Herstellung der erfindungsgemäßen Fußbodenbeläge wird entweder eine entsprechende fertige Substratbahn mit einer der gewünschten Enddicke entsprechenden Menge des Acrylatplastisols beschichtet (beispielsweise 0,1 - 1 mm, vorzugsweise 0,2 - 0,5 mm) und anschließend bei erhöhter Temperatur geliert und getrocknet, wobei zusätzlich durch entsprechende Prägungen die Oberfläche strukturiert werden kann.

Vorzugsweise wird jedoch ein entsprechendes Trägermaterial, welches entweder aus einem in die Bahn einzuarbeitenden Glasfaser- oder Textilgewebe oder aus einem nach der Ausformung wieder abzuziehenden Papier oder einer Hilfsfolie besteht mit einerseits dem PVC-Material (z.B. einem zum Ausschäumen geeigneten PVC-Plastisol) und andererseits dem Acrylatplastisol beschichtet und als Verbund einem Gelier- und Ausschäumofen zugeführt, in dem die Gelierung und Trocknung der Acrylat-Lauf- und -Deckschicht erfolgt und gleichzeitig das Substrat geliert und aufgetrieben wird, wodurch bei entsprechender Ausbildung des Ofens auch die Ausprägung der Oberfläche mit erfolgt. Abkühlen, Konfektionieren und Verpacken des Materials erfolgen in gewohnter Weise. Eine Strukturierung der Oberfläche kann weiterhin erfolgen, in dem mit der Oberflächenbeschichtung auch partiell ein Schaumbildungsinhibitor, beispielsweise ein Triazolderivat aufgebracht wird.

Es ist weiterhin möglich, der Rezeptur Glas- oder Keramikmehl oder entsprechende Hohlkügelchen oder auch metallisierende Pulver sowie natürlich Farbpigmente hinzuzufügen, um dadurch entsprechende Keramik-, Metall- oder Farbeffekte zu erzeugen. Da die ganze Polyacrylatschicht entsprechend ausgerüstet werden kann, bleiben diese Effekte im Gegensatz zu den bekannten Beschichtungen, die nur einige $\mu$m-Dicke aufwiesen, über die gesamte Nutzungsdauer/Lebensdauer des Belages, auch in hochfrequentierten Gehzonen erhalten, wodurch sich ein gleichmäßiges, optisches Erscheinungsbild bildet.

Ferner kann die Rezeptur noch übliche Bacterizide oder Antistatica enthalten.

Weichere, jedoch wirtschaftlich günstigere Beschichtungen lassen sich darüberhinaus durch Verschneiden der erfindungsgemäßen Polyacrylat-Plastisole mit 1 - 99 % eines PVC-Plastisols erzielen. Verschnitte mit bis zu 50 % PVC sind bevorzugt. PVC-plastisole sind als Beschichtungsmaterial bekannt. Die erfindungsgemäße Mischung hat den Vorteil einer größeren Festigkeit gegenüber PVC-Beschichtungen und weist ebenfalls noch die vorteilhafte "trockene" Oberfläche sowie den für die Acrylat-Plastisole typischen "Keramikeffekt" auf.

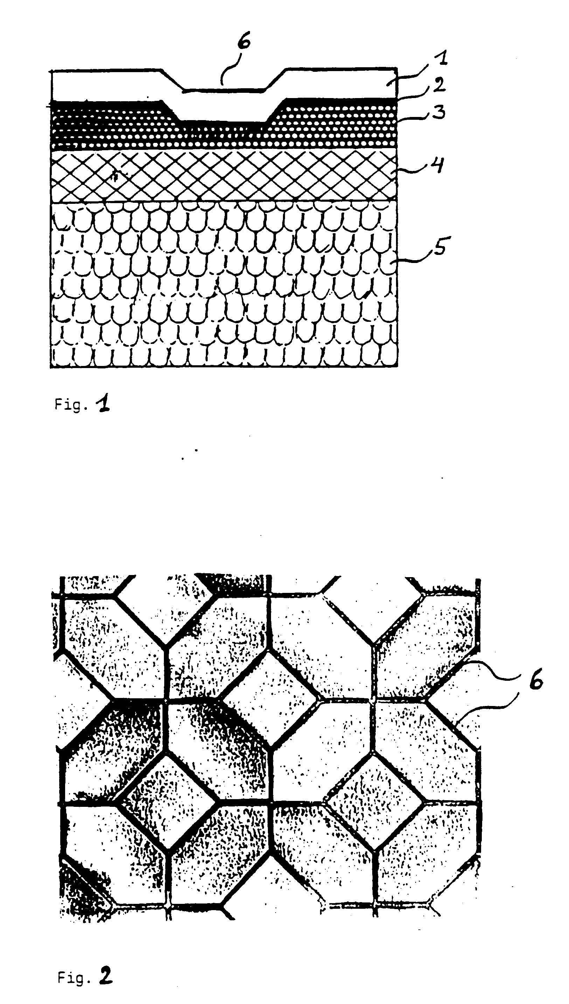

In der Figur 1 ist in einem Schnittbild der typische Aufbau eines erfindungsgemäßen strukturierten Bodenbelags wiedergegeben, der aus der Acrylatschicht 1, einer Druckschicht 2, einer PVC-Strukturschaumschicht 3, einer mit PVC getränkten Glasfaserschicht 4 und einer offenporigen PVC-Schaum-Grundschicht 5 besteht. PVC-Schicht 3 und Acrylatschicht 1 zeigen darüberhinaus noch eine eingesenkte Struktur 6.

Die Figur 2 zeigt einen entsprechenden Bodenbelag in der Draufsicht, wobei die Strukturvertiefungen 6 ein geometrisches Muster bilden, welches zusätzlich durch eine farbige Unterlegung in der Druckschicht 2 hervorgehoben ist. Der keramikähnliche Eindruck der geometrischen Form wird durch eine entsprechende Struktur der Acrylatschicht 1, welche eingelagerte Hohlkügelchen enthält, verstärkt.

In den folgenden Beispielen ist die Erfindung näher erläutert.

**Beispiel 1: Polyacrylat-Plastisol-Grundmischung**

| | |
|---|---|
| Polymethylmethacrylat Emulsionspolymerisat, Korngröße 20-30 μm PLEXIGUM [R] M 914 (WZ d.Fa.Röhm) | 135,0 kg |
| Polymethylmethacrylat Suspensionspolymerisat, Korngröße 100 μm PLEXIGUM [R] 7911/85 (WZ d.Fa.Röhm) | 135,0 kg |
| Benzyloctylphthalat SANTICIZER 261 | 150,0 kg |
| Butylbenzylphthalat BBP-WM | 30,0 kg |
| | 450,0 kg |

150 kg SANTICIZER 261 (Benzyloctylphthalat) und 30 kg BBP (Butylbenzylphthalat) werden in einem Disperser-Mischer vorgelegt und ein Pulvergemisch aus PLEXIGUM 7911/85 und M 914 langsam unter drehender Disperserscheibe hinzugefügt.

Das Eindispergieren des Pulvers wird ca. 20 Minuten vorgenommen, danach wird die Paste in bekannter Weise entlüftet und dem Beschichtungsaggregat zugefügt.

Das zu beschichtende Substrat wird mit einer 0,25 mm dicken Acrylat-Pastenschicht bestrichen. Die so beschichtete Bahn wird dem Gelier-/Ausschäumofen zugefügt, wo eine Gelierung/Trocknung der Acrylat-Lauf- und Deckschicht erfolgt und gleichzeitig deas Substrat geliert und aufgetrieben wird. Nach dem Ofen erfolgt Kühlung, Konfektionierung und Verpackung der Fußbodenbahn.

**Beispiel 2: Polyacrylat-Plastisol mit Vernetzer**

| | |
|---|---|
| PLEXIGUM [R] 7911/85 (Röhm) | 135,0 kg |
| PLEXIGUM [R] M 914 (Röhm) | 135,0 kg |
| SANTICIZER 261 | 100,0 kg |
| BBP-WM | 20,0 kg |
| Triethylenglykol-dimethacrylat | 45,0 kg |
| Peroxid | 2,0 kg |
| | 437,0 kg |

Die Verarbeitung erfolgt wie in Beispiel 1, wobei das monomere Triethylglykoldimethacrylat als Weichmacher (Pastenverarbeitungshilfe) dient und diesen beigemischt wird. Bei der Gelierung der Rezeptur erfolgt die Vernetzung über die zugefügten Peroxide. Der Vorteil dieses Zusatzes liegt in der Reduzierung der Menge der Primärweichmacher S 261 und BBP und in der zusätzlichen Verbesserung der Fleckbeständigkeit. Darüberhinaus gewinnt dieser Deckstrich an Festigkeit. Die Steifigkeit/Flexibilität des Deckstrichs kann über die Monomermenge gesteuert werden.

**Beispiel 3: Polyacrylat-Plastisol mit Glasmehl**

| | |
|---|---|
| PLEXIGUM 7911/85 (Röhm) | 100,0 kg |
| PLEXIGUM [R] M 914 (Röhm) | 150,0 kg |
| SANTICIZER 261 | 150,0 kg |
| BBP WM | 50,0 kg |
| Glasmehl | 40,0 kg |
| | 490,0 kg |

**Beispiel 4: Polyacrylat-Plastisol mit Keramikfüller**

| PLEXIGUM M 914 (Röhm) | 250,0 kg |
|---|---|
| SANTIZICER 261 | 150,0 kg |
| Siloxan-Entlüfungsmittel | 2,0 kg |
| Keramischer Hohlkörperfüller (∅ 50 - 100 μm) | 50,0 kg |
| | 452,0 kg |

Die keramischen Hohlkörperfiller können metallisierte bzw. farbige Ausrüstungen aufweisen und gewünschte keramik- bzw. steinartige Oberflächen-Erscheinungen als durchgehende Effekte der gesamten Nutzschicht mit entsprechender Lebensdauer bewirken.

## Beispiel 5: Polyacrylat/PVC-Plastisol-Mischung

Es besteht aus einer Abmischung eines Acrylat-Plastisols zu 50 % mit einem PVC-Plastisol.

| PLEXIGUM [R] 7911/85 (Röhm) | 135,0 kg |
|---|---|
| PLEXIGUM [R] M 914 (Röhm) | 135,0 kg |
| Benzyloktylphthalat-WM | 150,0 kg |
| Butyl-Benzylphthalat-WM | 30,0 kg |
| transparente PVC-Paste* | 450,0 kg |
| | 900,0 kg |

* diese kann z.B. folgende Rezeptur haben:

| P-PVC SOLVIC [R] 376 NB | 700,0 kg |
|---|---|
| Extender PVC VINNOL[R] C 65 V | 300,0 kg |
| Butylbenzylphthalat | 350,0 kg |
| Verdünner (Dodecylbenzol) | 85,0 kg |
| Viskositätserniedriger (Ethoxylierte Fettsäureester) | 5,0 kg |
| Sn-Stabilistator | 20,0 kg |
| | 1.450,0 kg |

Auch diese Abmischung zeigt noch den typischen "Keramik-Effekt" und eine trockene Oberfläche.

## Patentansprüche

1. Verwendung von Acrylat-Plastisolen zur Oberflächenbeschichtung von Kunststoffbödenbelägen, insbesondere PVC- oder PVC-Schaum-Belägen, die aus Polyacrylat, Polymethacrylat und/oder Polyacrylat/Polymethacrylatcopolymerisaten und Weichmachern, vorzugsweise Phthalsäureestern gebildet sind, dadurch gekennzeichnet, daß das Acrylat eine Mischung aus 90-30 % Emulsionspolymerisat mit einer Agglomerat-Teilchengröße von 5-50 μm mit 10-70 % eines Suspensionspolymerisats mit Korngrößen von 50-200 μm ist und auf 10 Teile Acrylat 5-20 Teile Weichmacher enthalten sind.

2. Verwendung gemäß Anspruch 1, dadurch gekennzeichnet, daß das Emulsionspolymerisat eine Agglomerat-Teilchengröße von 20-80 μm hat, wobei die Primärteilchen einen Durchmesser von ca. 1 μm aufweisen und in einer Menge von 60-40 % enthalten ist.

3. Verwendung von Acrylat-Plastisolen nach einem der Ansprüche 1 bis 2, dadurch gekennzeichnet, daß das Pastisol Zusätze, wie Glasmehl und keramische Hohlkörper-Füllstoffe bzw. dekorative Pulver, Farbstoffe, Bactericide, Antistatica und/oder Schaumbildungsinhibitoren enthält.

4. Verwendung von Acrylat-Plastisolen nach einem der Ansprüche 1 bis 3, dadurch gekennzeichnet, daß die Plastisole als Weichmacher Polymethylmethacrylat, Benzyloctylphthalat und/oder Butylbenzylphthalat enthalten.

**5.** Verwendung von Acrylat-Plastisolen nach einem der Ansprüche 1 bis 4, dadurch gekennzeichnet, daß sie mit 1 - 99 % PVC-Plastisol vermischt sind.

**6.** Verwendung von Acrylat-Plastisolen nach einem der Ansprüche 1 bis 5, dadurch gekennzeichnet, daß das Plastisol zusätzlich vernetzende Methacrylatmonomere und Radikalbildner, z.B. Peroxid, in einem Anteil von 1 - 20 %, vorzugsweise 2 - 10 %, bezogen auf Gesamtrezeptur, enthält.

**Claims**

**1.** Use of acrylate plastisols for the surface coating of synthetic material floor coverings, especially of PVC or PVC foam coverings, which are formed from polyacrylate, polymethacrylate and/or polyacrylate polymethacrylate co-polymers and plasticisers, preferably phthalic acid esters, characterised in that the acrylate is a mixture of 90 - 30% emulsion polymer with an agglomerate particle size of 5 - 50 $\mu$m with 10 - 70% of a suspension polymer with particle sizes of 50 - 200 $\mu$m and contains 5 - 20 parts of plasticiser per 10 parts of acrylate.

**2.** Use according to claim 1, characterised in that the emulsion polymer has an agglomerate particle size of 20 - 80 $\mu$m, whereby the primary particles display a diameter of about 1 $\mu$m and are contained in an amount of 60 - 40%.

**3.** Use of acrylate plastisols according to one of claims 1 to 2, characterised in that the plastisol contains additives, such as glass powder and ceramic hollow body filling materials or decorative powders, colouring materials, bactericides, antistatics and/or foam formation inhibitors.

**4.** Use of acrylate plastisols according to one of claims 1 to 3, characterised in that, as plasticisers, the plastisols contain polymethyl methacrylate, benzyloctyl phthalate and/or butylbenzyl phthalate.

**5.** Use of acrylate plastisols according to one of claims 1 to 4, characterised in that they are admixed with 1 - 99% PVC plastisols.

**6.** Use of acrylate plastisols according to one of claims 1 to 5, characterised in that the plastisol additionally contains cross-linking methacrylate monomers and radical formers, e.g. peroxide, in a proportion of 1 - 20%, preferably of 2 - 10%, referred to the total formulation.

**Revendications**

**1.** Utilisation de plastisols d'acrylate pour l'enduction de surfaces de revêtements de sol en matière synthétique, en particulier de revêtements en CPV ou en mousse de CPV, qui sont formés de polyacrylate, de polyméthacrylate et/ou de copolymères de polyacrylate/ polyméthacrylate et d'agents plastifiants, de préférence d'esters d'acide phtalique, caractérisée en ce que l'acrylate est un mélange de 90 à 30 % de produit de polymérisation en émulsion ayant une dimension de particules d'agglomérat de 5 à 50 $\mu$m avec 10 à 70 % d'un produit de polymérisation en suspension ayant des dimensions granulaires de 50 à 200 $\mu$m et en ce que 5 à 20 parties d'agent plastifiant sont contenues pour 10 parties d'acrylate.

**2.** Utilisation suivant la revendication 1, caractérisée en ce que le produit de polymérisation en émulsion a une dimension de particules d'agglomérat de 20 à 80 $\mu$m, les particules primaires présentant un diamètre d'environ 1 $\mu$m, et en ce qu'il est contenu en une quantité de 60 à 40 %.

**3.** Utilisation de plastisols d'acrylate suivant l'une des revendications 1 et 2, caractérisée en ce que le plastisol contient des additifs, tels que du verre pulvérisé et des substances de remplissage à base de corps creux céramiques, et respectivement des poudres décoratives, des colorants, des bactéricides, des antistatiques et/ou des inhibiteurs de formation de mousse.

**4.** Utilisation de plastisols d'acrylate suivant l'une des revendications 1 à 3, caractérisée en ce que les plastisols contiennent, comme agent plastifiant, du polyméthacrylate de méthyle, du phtalate de benzyloctyle et/ou du phtalate de butylbenzyle.

6

**5.** Utilisation de plastisols d'acrylate suivant l'une des revendications 1 à 4, caractérisée en ce qu'ils sont mélangés à 1-99 % de plastisol de CPV.

**6.** Utilisation de plastisols d'acrylate suivant l'une des revendications 1 à 5, caractérisée en ce que le plastisol contient en supplément des monomères de méthacrylate réticulants et des générateurs de radicaux, par exemple du peroxyde, en une fraction de 1 à 20 %, de préférence de 2 à 10 %, par rapport à la formule globale.

Fig. 1

Fig. 2